# EUROPÄISCHE PATENTSCHRIFT

(11) **EP 1 473 483 B1**
(45) Veröffentlichungstag und Bekanntmachung des Hinweises auf die Patenterteilung: **01.02.2006**
(21) Anmeldenummer: 04008406.3
(22) Anmeldetag: 07.04.2004
(51) Int. Cl.: F16F 9/46, F16F 9/516

(54) **Hydraulischer Stossdämpfer**
Hydraulic shock absorber
Amortisseur hydraulique

(30) Priorität: 30.04.2003 DE 10319390
(43) Veröffentlichungstag der Anmeldung: 03.11.2004
(73) Patentinhaber: ThyssenKrupp Bilstein GmbH, 58256 Ennepetal (DE)
(72) Erfinder: Hönig, Michael, 58256 Ennepetal (DE); Poetsch, Günter, Dipl.-Ing., 74372 Sersheim (DE); Kloss, Hendrik, Dipl.-Ing., 22457 Hamburg (DE); Mages, Stefan, Dipl.-Ing., 50354 Hürth (DE)
(74) Vertreter: Adams, Steffen

(56) Entgegenhaltungen:
- DE-A1- 3 608 738
- DE-C1- 10 138 487
- FR-A- 2 702 529
- JP-A- 2002 181 114

## Beschreibung

Die Erfindung betrifft einen hydraulischen Stoßdämpfer nach dem Oberbegriff des Anspruchs 1.

Hydraulische Stoßdämpfer werden zur Dämpfung der Bewegung von über Federn angelenkten Radaufhängungen vorzugsweise bei Kraftfahrzeugen eingesetzt.

Dabei erfolgt die Dämpfung durch das Durchpressen von Dämpfungsflüssigkeit durch vorzugsweise federbelastete Durchtritte im Arbeitskolben von einem Arbeitsraum in einen anderen Arbeitsraum des mit Dämpfungsflüssigkeit gefüllten Stoßdämpferrohres.

Um eine definierte verringerte Dämpfung bei kleinen Kolbengeschwindigkeiten zu erzielen, ist es bekannt hydraulisch parallel zu den Durchbrüchen im Arbeitskolben Bypass-Öffnungen vorzusehen, die die beiden Arbeitsräume hydraulisch miteinander verbinden. Es ist weiterhin bekannt, den Querschnitt der Durchtrittsöffnungen des Bypasses einstellbar zu gestalten.

Die DE 101 38 487 C1 zeigt einen derartigen Stoßdämpfer. Dieser Stoßdämpfer ist mit einer Bypasseinrichtung in einer axialen Bohrung der Kolbenstange ausgebildet. Die Bypasseinrichtung wirkt mit seitlichen Auslässen durch die Kolbenstange zusammen. Zum Regeln des Bypasses entsprechend der unterschiedlichen Bewegung des Stoßdämpferkolbens im Stoßdämpferrohr (1) Druckstufe oder Zugstufe ist ein Steuerrohr vorgesehen, das seitliche Bunde aufweist und in einem oder mehreren weiteren Rohrelementen geführt ist. Diese Rohrelemente sind zueinander axial verstellbar und weisen Anschläge auf, gegen die der Bund des axialbeweglichen Steuerrohres fährt.

Nachteilig bei der Ausbildung der hier beschriebenen Bypasseinrichtung ergibt sich, dass das Steuerrohr, dessen Bewegungsrichtung sich entsprechend der Bewegungsrichtung des Stoßdämpfers ständig ändert und dessen seitlichen Bunde ständig gegen die Anschläge der Rohrelemente schlagen, eine große zu beschleunigende Masse aufweist, die jeweils neu beschleunigt werden muss, was zum einen dazu führt, dass die Steuerfrequenz in seiner Höhe begrenzt ist und zum anderen die Wirkung hat, dass hohe Kräfte und damit großer Verschleiß auftritt.

Der Erfindung liegt die Aufgabe zugrunde, die Bypasseinrichtung derartig weiterzubilden, dass die vorstehend beschriebenen Nachteile reduziert werden, wobei die Bypasseinrichtung weiterhin einfach aufgebaut sein soll.

Die Aufgabe wird erfindungsgemäß mit den Merkmalen des Anspruchs 1 gelöst. Vorteilhafte Aus- und Weiterbildung sind in den Ansprüchen 2 bis 5 beschrieben.

Die mit der Erfindung erzielten Vorteile bestehen insbesondere darin, dass die Bypasseinrichtung ein von der Masse wesentlich verringertes Steuerelement aufweist. Da die Steuerscheiben mittels einer Feder axial auseinandergedrückt werden, muss dieses Steuerelement nicht mehr ständig beschleunigt werden, um seine Steueraufgaben wahrnehmen zu können. Vorteilhaft treten auch keine wahrnehmbaren Schläge, hervorgerufen durch die Bypasseinrichtung, mehr auf. Weiterhin vorteilhaft muss ein als Steuerrohr ausgebildetes Steuerelement vor dem Schließen nicht erst in die Arbeitsposition geschoben werden, mit dem Vorteil, dass nicht zuerst ein Druck aufgebaut werden muss, um die Steuerscheibe in die Arbeitsposition zu schieben. Das hat besondere Vorteile beim Verlauf der Bypasskennlinie.

Ein Ausführungsbeispiel der Erfindung ist in der Zeichnung dargestellt und wird im Folgenden näher beschrieben.

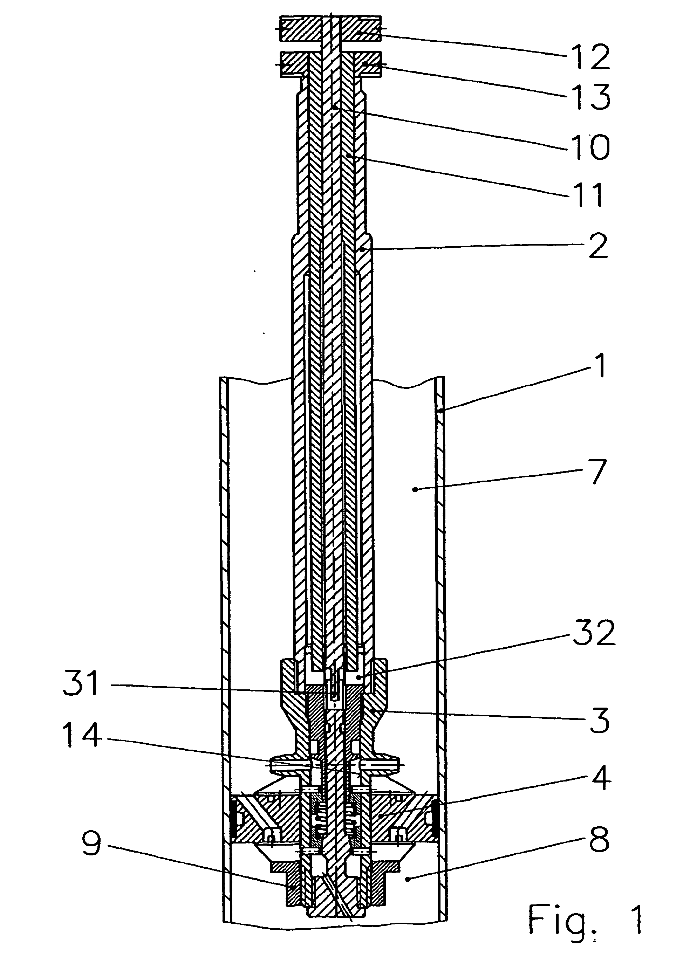

Figur 1 zeigt einen Schnitt durch den Kolbenbereich des Stoßdämpfers und
Figur 2 zeigt eine vergrößerte Darstellung des Kolbenbereichs.

Der Stoßdämpfer weist ein Stoßdämpferrohr 1 auf, das mit Dämpfungsflüssigkeit gefüllt ist. Eine Kolbenstange 2, an dessen Ende über eine Kolbenstangenverlängerung 3 ein Arbeitskolben 4 angebunden ist, taucht oszillierend in das Stoßdämpferrohr 1 ein. Der Arbeitskolben 4 ist mit Durchbrüchen 5 und mit als Federscheiben 6 ausgebildeten Dämpfungsventilen versehen. Er trennt den Innenraum des Stoßdämpfers in zwei Arbeitsräume 7, 8.

Die Strömung der Dämpfungsflüssigkeit in Zugrichtung der Kolbenstange 2 erfolgt durch den Arbeitskolben 4 vom oberen Arbeitsraum 7 in den unteren Arbeitsraum 8 und wird hierbei durch die Durchbrüche 5 und Dämpfungsventile gebremst. In umgekehrter Weise durchströmt die Dämpfungsflüssigkeit den Arbeitskolben 4 in Druckrichtung der Kolbenstange vom unteren Arbeitsraum 8 in den oberen Arbeitsraum 7.

Über Befestigungselemente wie die Mutter 9 wird der Arbeitskolben 4 auf der Kolbenstangenverlängerung 3 befestigt.

Zum Einbau der Bypasseinrichtung ist die Kolbenstange 2 mit einer axialen, im Ausführungsbeispiel zentralen Bohrung ausgebildet. Auch die Kolbenstangenverlängerung 3 ist mit einer derartigen zentralen Bohrung ausgebildet. Die eigentliche einstellbare Bypasseinrichtung ist in der Kolbenstangenverlängerung 3 angeordnet, während in der zentralen Bohrung der Kolbenstange 2 entsprechende Stellelemente, wie eine Stellstange 10 und ein diese umgebendes Stellrohr 11 angeordnet sind. Stellstange 10 und Stellrohr 11 sind außerhalb der Kolbenstange 2 mit Stellrädern 12, 13 ausgebildet. Durch Verdrehen von Stellstange 10 oder Stellrohr 11 werden die Bypassquerschnitte der Bypasseinrichtung verstellt.

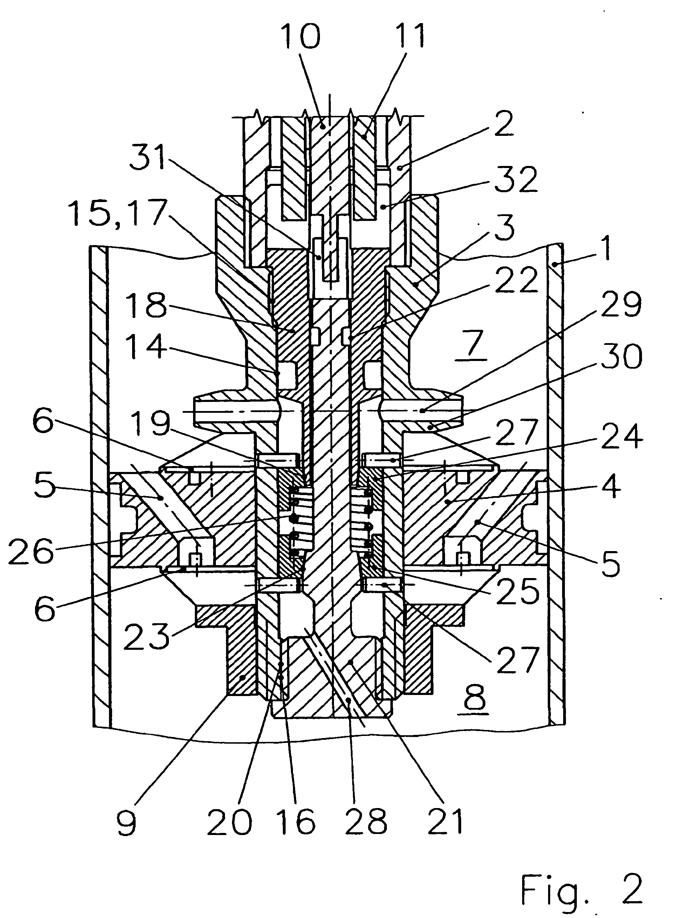

Die eigentliche Bypasseinrichtung, die wie bereits vorher beschrieben, innerhalb der Kolbenstangenvertängerung 3 angeordnet ist, ist in Figur 2 vergrößert dargestellt. Die Kolbenstangenverlängerung 3 ist mit dem Ende der Kolbenstange 2 verschraubt. Sie weist eine zentrale Bohrung 14 auf, in der die Einbauteile angeordnet sind. Am jeweiligen Ende dieser zentralen Bohrung 14 ist jeweils ein Innengewinde 15, 16 angeordnet. In das in der Zeichnung oben dargestellte Innengewinde 15 ist mit einem entsprechend ausgebildeten Außengewinde 17 versehenes Stellelement 18 eingeschraubt. Dieses Stellelement 18 weist an seinem unteren Ende einen Ventilkegel 19 auf. Am in der Zeichnung unteren Innengewinde 16 der Kolbenstangenverlängerung 3 ist über ein entsprechendes Außengewinde 20 ein Stellelement 21 verstellbar eingebunden. Dieses Stellelement 21 ist stiftförmig ausgebildet und durchgreift das Stellelement 18 durch eine diese durchdringende zentrale Bohrung 22. Auch das Stellelement 21 ist mit einem Ventilkegel 23 ausgebildet.

Im Bereich zwischen den Ventilkegeln 19,23 der Stellelemente 18, 21 sind innerhalb der zentralen Bohrung 14 der Kolbenstangenverlängerung 3 axial gleitbar Steuerscheiben 24, 25 angebracht. Im Ausführungsbeispiel sind diese Steuerscheiben 24, 25 ringförmig mit einem L-förmigem Querschnitt ausgebildet. Eine zwischen den Steuerscheiben 24, 25 angeordnete auf Druck belastete als Wendelfeder ausgebildete Feder 26 dient dazu, die Steuerscheiben 24, 25 mit einer vorgegebenen Spannung auseinanderzuhalten. Die axiale Lage der Steuerscheiben 24, 25 ist durch in die Kolbenstangenverlängerung 3 eingebrachte Zylinderstifte 27 begrenzt.

Die Durchströmung des Bypasses erfolgt durch einen Durchbruch 28 im äußeren Teil des Stellelements 21 und von hier in den Innenraum der Stelleinrichtung. Dieser Durchbruch 28 stellt die Verbindung zum unteren Arbeitsraum 8 dar. Die Verbindung der Bypasseinrichtung zum oberen Arbeitsraum 7 erfolgt durch Durchbrüche 29 durch die Kolbenstangenverlängerung 3. Im Ausführungsbeispiel durchdringen diese Durchbrüche 29 Stutzen 30.

Als Schlitz und Klinge ausgebildete Drehverbindungen 31, 32 bilden die drehbare Anbindung des Stellelements 18 mit dem Stellrohr 11 und des Stellelements 21 mit der Stellstange 10. Dadurch wird bewirkt, dass sich beim Verdrehen von Stellstange 10 oder Stellrohr 11 das jeweils angebundene Stellelement 18, 21 ebenfalls dreht und mit seinem jeweiligen Außengewinde 17, 20 in das jeweilige Innengewinde 15, 16 herein- oder herausschraubt. Dieses Schrauben bewirkt wiederum eine axiale Verstellung der jeweiligen Ventilkegel 19, 23 gegenüber den zugehörigen Steuerscheiben 24, 25 . Dadurch wird erreicht, dass bei Anliegen der Steuerscheiben 24, 25 an den Zylinderstiften 27 ein mehr oder minder großer Ringspalt als Bypass für die Zugstufe oder Druckstufe des Stoßdämpfers einstellbar ist.

Beim Einfahren der Kolbenstange 2 mit dem angebundenen Arbeitskolben 4 in das Stoßdämpferrohr 1 entsteht ein Überdruck im unteren Arbeitsraum 8 gegenüber dem oberen Arbeitsraum 7. Dadurch hebt sich die untere Steuerscheibe 25 gegen den Druck der Feder 26 von den unteren Zylinderstiften 27 ab. Es kann ein Druckausgleich durch Durchströmen des Bypassspaltes zwischen der oberen Steuerscheibe 24 und dem Ventilkegel 19 des oberen Stellelements 18 erfolgen. Die durch den vorbeschriebenen Ringspalt des Bypasses strömende Dämpfungsflüssigkeit kann durch die Durchbrüche 29 in den oberen Arbeitsraum 7 gelangen.

Beim Herausfahren der Kolbenstange 2 mit dem angebundenen Arbeitskolben 4 aus dem Stoßdämpferrohr 1 erfolgt die Durchströmung der Bypasseinrichtung in umgekehrter Richtung. Durch den im oberen Arbeitsraum 7 erzeugten Überdruck wird die obere Steuerscheibe 24 von den Zylinderstiften 27 abgehoben, wodurch dann der durch die untere Steuerscheibe 25 mit dem Ventilkegel 23 des Stellelements 21 gebildete Bypassringspalt durchströmt werden kann.

### Bezugszeichenliste

- 1.: Stoßdämpferrohr
- 2.: Kolbenstange
- 3.: Kolbenstangenverlängerung
- 4.: Arbeitskolben
- 5.: Durchbruch
- 6.: Federscheibe
- 7.: Arbeitsraum
- 8.: Arbeitsraum
- 9.: Mutter
- 10.: Stellstange
- 11.: Stellrohr
- 12.: Stellrad
- 13.: Stellrad
- 14.: Bohrung
- 15.: Innengewinde
- 16.: Innengewinde
- 17.: Außengewinde
- 18.: Stellelement
- 19.: Ventilkegel
- 20.: Außengewinde
- 21.: Stellelement
- 22.: Bohrung
- 23.: Ventilkegel
- 24.: Steuerscheibe
- 25.: Steuerscheibe
- 26.: Feder
- 27.: Zylinderstift
- 28.: Durchbruch
- 29.: Durchbruch
- 30.: Stutzen
- 31.: Drehverbindung
- 32.: Drehverbindung

## Patentansprüche

1. Hydraulischen Stoßdämpfer mit einem mit Dämpfungsflüssigkeit gefüllten Stoßdämpferrohr (1) und einem am Ende einer oszillierend in das Stoßdämpferrohr (1) eintauchenden Kolbenstange (2) angeordneten, das Stoßdämpferrohr (1) in zwei Arbeitsräume (7, 8) teilenden, mit Durchbrüchen (5) und Dämpfungsventilen versehenen Arbeitskolben (4), mit einer einstellbaren Bypasseinrichtung, deren Bypassquerschnitt für die Strömung in Zugrichtung der Kolbenstange (2) und der Bypassquerschnitt für die Strömung in Druckrichtung unabhängig voneinander fest einstellbar sind, wobei die Bypasseinrichtung ein axial bewegliches Steuerelement aufweist, das endseitig jeweils auf einen Ventilkörper zufährt und dessen axialer Verschiebeweg mittels Anschlägen begrenzt ist, wobei die Bypasseinrichtung in einer axialen Bohrung der Kolbenstange angeordnet, mit jeweiligen Auslässen zu den Arbeitsräumen (7, 8) zusammenwirkt und dass das Steuerelement wenigstens einen seitlichen Bund aufweist und in einem oder mehreren weiteren Rohrelementen geführt ist, **dadurch gekennzeichnet, dass** das Steuerelement mehrteilig bestehend aus wenigstens zwei Steuerscheiben (24, 25) ausgebildet ist, die axial vor feste Anschläge fahren und mit axial verstellbaren, die Bypassgröße für die Zugrichtung und die Druckrichtung bestimmende Stellelementen (18, 21) einen Durchlass bilden, wobei die Steuerscheiben (24, 25) mittels eines Federelements (26) axial auseinandergedrückt werden.

2. Hydraulischer Stoßdämpfer nach Anspruch 1, **dadurch gekennzeichnet, dass** die Bypasseinrichtung in einer Kolbenstangenverlängerung (3) eingebaut ist.

3. Hydraulischer Stoßdämpfer nach Anspruch 2, **dadurch gekennzeichnet, dass** der Arbeitskolben (4) radial auf der Kolbenstangenverlängerung (3) angeordnet ist.

4. Hydraulischer Stoßdämpfer nach Anspruch 2 oder 3, **dadurch gekennzeichnet, dass** die Stellelemente (18; 21) mit Außengewinden (17, 20) ausgebildet sind, die mit Innengewinden (15, 16) in der Kolbenstangenverlängerung (3) korrespondieren.

5. Hydraulischer Stoßdämpfer nach einem oder mehreren der Ansprüche 2 bis 4, **dadurch gekennzeichnet, dass** der endseitige Auslass zum hydraulischen Verbinden mit dem unteren Arbeitsraum (8) durch das untere Stellelement (21) geführt ist.

## Claims

1. Hydraulic shock absorber having a shock absorber pipe (1), which is filled with damping fluid, and having a working piston (4) which is disposed at the end of a piston rod (2), passing in an oscillating manner into the shock absorber pipe (1), divides the shock absorber pipe (1) into two working chambers (7, 8) and is provided with orifices (5) and damping valves, having an adjustable bypass device, the bypass cross-section of which for flow in the drawing direction of the piston rod (2) and the bypass cross-section for the flow in the compression direction can be fixedly set independently of each other, wherein the bypass device has an axially moveable control element which moves at the end respectively towards a valve body and the axial displacement path of which is limited by stops, wherein the bypass device is disposed in an axial bore in the piston rod, cooperates with respective outlets to the working chambers (7, 8) and that the control element has at least one lateral collar and is guided in one or several further pipe elements, **characterised in that** the control element is formed from a number of parts consisting of at least two control discs (24, 25) which travel axially up to fixed stops and with axially adjustable actuating elements (18, 21), which determine the bypass size for the drawing direction and the compression direction, form a passage, wherein the control discs (24, 25) are pushed apart from each other axially by means of a spring element (26).

2. Hydraulic shock absorber as claimed in claim 1, **characterised in that** the bypass device is installed in a piston rod extension (3).

3. Hydraulic shock absorber as claimed in claim 2, **characterised in that** the working piston (4) is disposed radially on the piston rod extension (3).

4. Hydraulic shock absorber as claimed in claim 2 or 3, **characterised in that** the actuating elements (18; 21) are formed with external threads (17, 20) which correspond with internal threads (15, 16) in the piston rod extension (3).

5. Hydraulic shock absorber as claimed in any one or several of claims 2 to 4, **characterised in that** the end outlet for hydraulic connection to the lower working chamber (8) passes through the lower actuating element (21).

## Revendications

1. Amortisseur hydraulique avec un tube d'amortisseur (1) rempli de fluide d'amortissement, et un piston de travail (4) agencé à l'extrémité d'une tige de piston (2) plongeant de manière oscillante dans le tube d'amortisseur (1), divisant le tube d'amortisseur (1) en deux chambres de travail (7, 8), pourvu de passages (5) et de soupapes d'amortissement, avec un système de dérivation ajustable, dont la section de dérivation pour le flux dans la direction de traction de la tige de piston (2) et la section de dérivation pour le flux dans la direction de compression sont ajustables de manière fixe, indépendemment l'un de l'autre, le système de dérivation présentant un élément de commande mobile axialement, qui se déplace pour venir en contact à une extrémité avec un corps de soupape et dont le déplacement axial est limité par des butées, le système de dérivation étant agencé dans un alésage axial de la tige de piston, coopérant avec des orifices de sortie vers les chambres de travail 7, 8), et l'élément de commande présentant au moins un collet latéral et étant guidé dans un ou plusieurs éléments de tube supplémentaires, **caractérisé en ce que** l'élément de commande est réalisé en plusieurs pièces comprenant au moins deux disques de commande (24, 25) qui se déplacent axialement contre des butées fixes et forment un passage avec des éléments d'ajustement (18, 21) ajustables axialement, déterminant la taille de la dérivation pour la course de traction et la course de compression, les disques de commande (24, 25) étant sollicités axialement à l'écart l'un de l'autre au moyen d'un élément à ressort (26).

2. Amortisseur hydraulique selon la revendication 1, **caractérisé en ce que** le système de dérivation est monté dans un prolongement (3) de la tige de piston.

3. Amortisseur hydraulique selon la revendication 2, **caractérisé en ce que** le piston de travail (4) est agencé radialement sur le prolongement (3) de la tige de piston.

4. Amortisseur hydraulique selon la revendication 2 ou 3, **caractérisé en ce que** les éléments d'ajustement (18, 21) sont réalisés avec des filets externes (17, 20) qui correspondent à des filets internes (15, 16) dans le prolongement (3) de la tige de piston.

5. Amortisseur hydraulique selon une ou plusieurs des revendications 2 à 4, **caractérisé en ce que** l'orifice de sortie d'extrémité pour une liaison hydraulique à la chambre de travail inférieure (8) traverse l'élément d'ajustement inférieur (21).
